Europäisches Patentamt

European Patent Office

Office européen des brevets

(19)

(11) Numéro de publication: **0 162 760 B1**

(12) **FASCICULE DE BREVET EUROPEEN**

(45) Date de publication de fascicule du brevet:
**16.10.91**

(51) Int. Cl.⁵: **F16L 59/04**, F16L 59/12

(21) Numéro de dépôt: **85400810.9**

(22) Date de dépôt: **25.04.85**

---

(54) **Conduite calorifugée pour le transport de fluides.**

---

(30) Priorité: **25.04.84 FR 8406483**

(43) Date de publication de la demande:
**27.11.85 Bulletin 85/48**

(45) Mention de la délivrance du brevet:
**16.10.91 Bulletin 91/42**

(84) Etats contractants désignés:
**DE GB IT NL SE**

(56) Documents cités:
**CH-A- 571 682**     **FR-A- 353 450**
**FR-A- 1 327 676**   **GB-A- 1 330 861**
**US-A- 2 857 931**   **US-A- 3 685 546**
**US-A- 3 687 765**

(73) Titulaire: **COFLEXIP**
**23 Avenue de Neuilly**
**F-75116 Paris(FR)**

Titulaire: **INSTITUT FRANCAIS DU PETROLE**
**4, Avenue de Bois-Préau**
**F-92502 Rueil-Malmaison(FR)**

(72) Inventeur: **Dridi, Hamadi**
**7, avenue de la Porte de Choisy**
**F-75013 Paris(FR)**
Inventeur: **Dewimille, Bernard**
**8, rue Vlaminck**
**F-91350 Grigny(FR)**

(74) Mandataire: **Leszczynski, André et al**
**CABINET NONY & CIE. 29 rue Cambacérès**
**F-75008 Paris(FR)**

EP 0 162 760 B1

Rank Xerox (UK) Business Services

## Description

La présente invention est relative à une conduite calorifugée pour le transport de fluides, utilisable en particulier mais non exclusivement pour le transport d'hydrocarbures produits par des puits sous-marins.

Le problème du calorifugeage des conduites sous-marines de production se pose en particulier pour l'exploitation de gisements d'huiles lourdes qui risquent de figer lors de leur transport entre le puits et la plate-forme par suite de pertes thermiques dans la conduite entourée d'eau de mer, le calorifugeage étant également nécessaire pour éviter la formation d'hydrates auxquels sont sujets certains pétroles bruts pendant leur refroidissement.

Il a déjà été proposé de réaliser des conduites calorifugées comportant un tube ou noyau central, essentiellement rigide, dont la paroi extérieure est entourée concentriquement d'une gaine tubulaire, elle-même rigide, et dans lesquelles une matière d'isolation, telle qu'une mousse de polyuréthane, est injectée dans l'espace annulaire formé autour de la surface extérieure du noyau. Cette injection de mousse peut être effectuée soit à terre soit sur barge. Il s'est avéré dans la pratique que de telles injections de mousse étaient difficiles à réaliser sur barge avant la pose de la conduite et, lorsqu'elles sont réalisées à terre, des problèmes importants se posent en ce qui concerne la manutention de la conduite rigide réalisée. Un autre inconvénient important des conduites réalisées jusqu'à présent est leur faible résistance à l'écrasement, ne dépassant généralement pas 5 bars, ce qui leur confère une tenue insuffisante aux contraintes extérieures, et en particulier la pression hydrostatique qui dans les conditions modernes d'exploitation peut être supérieure à 20 bars.

US-A-3 685 546 décrit ainsi une conduite calorifugée comportant un tube ou noyau central, une structure d'isolation thermique constituée par une pluralité de cloisons annulaires et un matériau d'isolation remplissant les chambres annulaires ménagées entre les faces frontales des cloisons successives et le revêtement extérieur du noyau central, et une gaine externe extrudée en continu concentriquement audit noyau central. Pour réaliser les cloisons la gaine externe est rabattue vers l'intérieur, le matériau constitutif des cloisons est mis en place et une couche de revêtement périphérique est appliquée pour assurer la continuité de la gaine externe.

Des moyens supplémentaires tels que des bagues d'écartement et des ressorts sont prévus pour maintenir l'écartement entre le noyau central et le revêtement externe.

La présente invention se propose de réaliser une conduite calorifugée comportant des cloisons permettant d'assurer à la fois une fonction d'écartement entre le noyau central et le revêtement externe et une fonction de séparation étanche entre les tronçons de matériau d'isolation situés entre les cloisons pour éviter que de l'eau qui aurait pu pénétrer accidentellement à l'intérieur d'un tronçon du matériau d'isolation puisse se propager à un autre tronçon.

La présente invention se propose de réaliser une conduite calorifugée comportant autour d'un tube ou noyau, de préférence flexible, une structure d'isolation thermique offrant en particulier une bonne résistance aux contraintes extérieures, en particulier vis-à-vis de l'écrasement, ayant un faible coefficient de conductibilité thermique, pouvant conserver ses propriétés physiques en présence d'eau de mer et ayant une absorption d'eau très faible, même sous pression et à des températures relativement élevées, notamment de l'ordre de 60° à 100° C.

Dans la présente demande le terme "flexible" s'entend pour désigner toute structure, le cas échéant rigide, apte à être enroulée sans dommage sur des tourets d'un diamètre ne dépassant pas 10 m.

L'invention est plus particulièrement applicable avec des tubes ou noyaux flexibles comportant une gaine interne d'étanchéité, des armures de renforcement et un revêtement extérieur de protection, ces tubes pouvant également comporter une carcasse métallique de résistance à l'écrasement. De tels tubes sont fabriqués et commercialisés en grandes longueurs et en différents diamètres par la Société Coflexip.

La conduite selon l'invention comporte autour du tube ou noyau interne une pluralité de cloisons annulaires réparties sur la longueur dudit noyau et solidaires de celui-ci, un matériau d'isolation remplissant les chambres annulaires ménagées entre les faces frontales des cloisons successives et le revêtement extérieur du noyau interne, et une gaine externe extrudée en continu concentriquement audit noyau.

Les caractéristiques d'un premier mode de réalisation font l'objet de la revendication 1. Les cloisons sont dans ce cas séparées les unes des autres et réalisées individuellement, par moulage, directement sur le noyau, d'une matière appropriée, notamment du polyuréthane modifié, et sont espacées le long du noyau à des intervalles compris de préférence entre 20 et 200 m, en fonction des conditions de service.

Ces cloisons présentent une étendue radiale à partir de leur diamètre intérieur comprise de préférence entre 20 et 100 mm, et une épaisseur comprise de préférence entre 100 et 250 mm.

Dans un seconde mode de réalisation dont les caractéristiques font l'objet de la revendication 2, les cloisons annulaire sont reliées entre elles par une âme tubulaire, à partir de laquelle elles s'étendent, ladite âme tubulaire entourant coaxialement le noyau interne.

Dans les deux modes de réalisation, les surfaces périphériques externes des cloisons peuvent comporter des moyens, tels que des nervures et/ou des saillies favorisant la mise en place et la tenue d'un produit d'adhérisation à la gaine extérieure extrudée autour du noyau muni desdites cloisons.

Dans une forme de réalisation préférée de l'invention, chacune des cloisons comporte au moins un évidement radial interne faisant communiquer le revêtement extérieur du noyau interne de la conduite, et l'extérieur de la conduite en débouchant dans un orifice correspondant ménagé dans la gaine externe de la conduite. A cet effet, une rainure périphérique formant un affaiblissement d'épaisseur du revêtement peut être ménagée dans celui-ci réalisant une zone de rupture préférentielle en cas de surpession de gaz.

Cette forme de réalisation convient dans le cas d'un noyau sujet à des diffusions de gaz, les évidements assurant des chemins préférentiels de passage du gaz diffusé évitant le passage de celui-ci dans le matériau d'isolation thermique entre les cloisons.

Le matériau d'isolation peut être mis en place par tout moyen approprié. En particulier, il est possible dans un mode de réalisation de l'invention d'injecter une mousse notamment de polyuréthane entre des cloisons annulaires précédemment mises en place sur le noyau, ou à l'intérieur d'un corps creux sous forme d'une partie de coquille ayant comme diamètre intérieur celui du diamètre extérieur du noyau, augmenté de quelques mm correspondant à l'épaisseur d'une bande nécessaire pour le rattrapage du jeu résultant entre le noyau et la coquille. Cette bande peut être réalisée par exemple en caoutchouc, PVC alvéolaire ou autre.

Cependant, dans un mode de réalisation avantageux de l'invention, le matériau d'isolation est mis en place par spiralage, autour du noyau, d'un profilé en forme de bande ou de tube que l'on enroule selon un pas déterminé et en un nombre de couches approprié correspondant au diamètre des cloisons annulaires.

Il est possible selon l'invention de combiner le cas échéant les modes d'application du matériau d'isolation, celui-ci pouvant pour partie être appliqué par injection, pour partie par spiralage, ou être effectué en coquille et pour partie par spiralage.

Dans un premier exemple d'exécution du spiralage, on peut utiliser une bande par exemple en PVC, PVCC, PC, expansé obtenu soit par extrusion, soit par raboutage de bandes découpées dans des plaques moulées; ou un profilé extrudé par exemple en PP, PPO, PVCC, que l'on applique sur le noyau interne par déformation. On confère à de tels profilés sous forme de bande par exemple une largeur de l'ordre de 0,5 à 10 cm et une épaisseur de l'ordre de 5 à 30 mm, la valeur de la déformation plastique variant selon l'épaisseur du profilé et le diamètre du noyau entre 2 et 10 %. De tels profilés possèdent une grande résistance à la traction permettant leur spiralage par machine tournante, à partir de bobines où les profilés sont stockés en très grande longueur. Le raboutage s'effectue par collage.

Dans un second mode d'exécution de l'invention, on peut spiraler à grands pas des tubes par exemple en PPO, PVCC, PE de diamètre pouvant varier entre 5 et 30 mm et d'épaisseur 0,5 à 4 mm. Ces tubes peuvent être remplis d'un matériau isolant par exemple des billes en polystyrène pour limiter le phénomène de convection.

Dans les deux modes d'exécution, le spiralage s'effectue avec un certain jeu qui confère à la structure de conduite une grande flexibilité compatible, le cas échéant, avec celle du tube ou noyau interne.

Il est également possible de placer entre les cloisons annulaires des disques ou des coquilles obtenus notamment par moulage de produits polymériques expansés.

En variante on peut mettre en place autour du noyau interne une pluralité de coquilles entre lesquelles on réalise les cloisons, notamment par injection, le matériau des cloisons pouvant le cas échéant entourer complétement les coquilles.

On peut réaliser ainsi selon l'invention notamment des conduites flexibles calorifugées en grande longueur.

D'autres avantages et caractéristiques de l'invention apparaîtront dans la description suivante d'exemples particuliers de réalisation donnés à titre nullement limitatif et se référant au dessin annexé dans lequel :

- la figure 1 est une vue très fragmentaire et schématique d'un tronçon de conduite selon un premier mode de réalisation,
- la figure 2 est une vue fragmentaire schématique d'un tronçon de conduite selon un second mode de réalisation,
- la figure 3 est une vue également fragmentaire et schématique d'une conduite selon un autre mode de réalisation,
- les figures 4 et 5 sont des vues agrandies illustrant des variantes de cloisons annulaires mises en place dans des conduites selon l'invention, et
- les figures 6 à 9 illustrent différentes phases de réalisation d'une conduite selon l'invention.

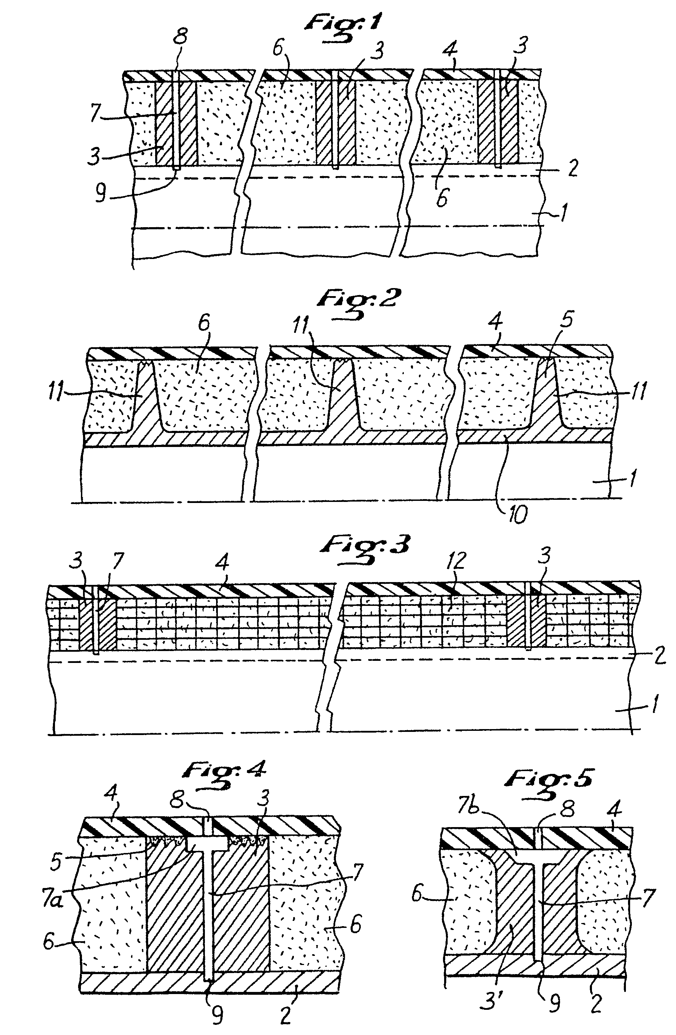

On se réfère tout d'abord à la figure 1.

La conduite illustrée sur cette figure comporte un tube ou noyau interne 1 muni d'un revêtement extérieur de protection 2 réalisé en un matériau souple tel qu'un polyamide ou du polyéthylène.

Autour du noyau 1 sont mises en place sur le revêtement extérieur 2 du noyau une pluralité de cloisons annulaires en forme de disques 3. Ces cloisons 3 en forme de disques sont dans un mode particulier de réalisation en polyuréthane d'une dureté comprise entre 70 et 90 shore A et sont placées sur le noyau avec des espacements déterminés, par exemple de l'ordre de 2 mètres dans le présent exemple.

La conduite selon l'invention comporte une gaine extérieure extrudée en continu 4 et solidarisée des surfaces périphériques des cloisons 3. Comme on le voit sur la figure 4, la surface périphérique des cloisons en forme de disques 3 présente une série de gorges 5 favorisant le collage avec la gaine 4 au moyen d'un adhésif tel qu'une colle thermofusible appliquée sur la périphérie de la cloison 3 avant application de la gaine ou injectée au travers de la gaine 4 comme cela sera décrit plus en détail plus loin.

Dans les espaces annulaires ménagés entre la face extérieure du revêtement 2, la gaine extérieure 4 et les différentes cloisons 3, est mis en place selon l'invention un matériau d'isolation 6. Dans le mode de réalisation de la figure 1, le matériau d'isolation 6 peut être une mousse de polyuréthane moulée par injection sur le noyau 1 après mise en place des cloisons 3, la gaine 4 étant également solidaire de la périphérie du matériau d'isolation 6.

Dans le mode de réalisation de la figure 1, il est prévu dans les cloisons 3 des évidements radiaux 7 débouchant dans des orifices 8 de la gaine externe 4 d'un côté et l'autre côté dans une rainure périphérique 9 ménagée dans le revêtement extérieur 2 du noyau. Ces évidements 7 ont pour fonction essentielle d'assurer des chemins préférentiels pour le passage de gaz contenu dans la conduite évitant à celui-ci, en cas de surpression, de diffuser à travers le matériau d'isolation 6.

On doit bien comprendre que ces évidements 7 ne constituent qu'une caractéristique optionnelle et que selon l'invention il est envisagé de prévoir des cloisons annulaires munies ou non de tels évidements.

Dans le mode de réalisation de la figure 2, la conduite comprend autour du noyau 1 une âme tubulaire 10 à partir de laquelle s'étendent des cloisons annulaires 11 sur la face périphérique desquelles est fixée la gaine extérieure 4.

Cette face périphérique des cloisons 11 est là encore avantageusement munie de rainures 5 pour favoriser l'adhérisation.

Un matériau d'isolation 6 est là encore utilisé pour remplir les espaces annulaires entre l'âme tubulaire 10, les cloisons 11 et la gaine 4. Bien que cela ne soit pas illustré sur le dessin il est également possible de prévoir, dans ce mode de réalisation, des évidements dans les cloisons pour assurer une protection vis-à-vis de surpressions de gaz.

Le mode de réalisation selon la figure 3 se distingue du mode de réalisation selon la figure 1 essentiellement par le fait que le matériau d'isolation désigné par 12 est mis en place par spiralage de bandes ou de profilés tels que décrits précédemment enroulés sur le noyau par déformation plastique ou un profilé alvéolaire en polypropylène non expansé enroulé par déformation élastique.

De tels profilés, actuellement connus, présentent une résistance à un écrasement de 10 % de l'ordre de 40 à 100 bars, une faible conductibilité thermique, une densité généralement comprise entre 0,25 et 0,6 grammes par cm$^3$, un bon comportement au fluage et une absorption d'eau très faible ou nulle.

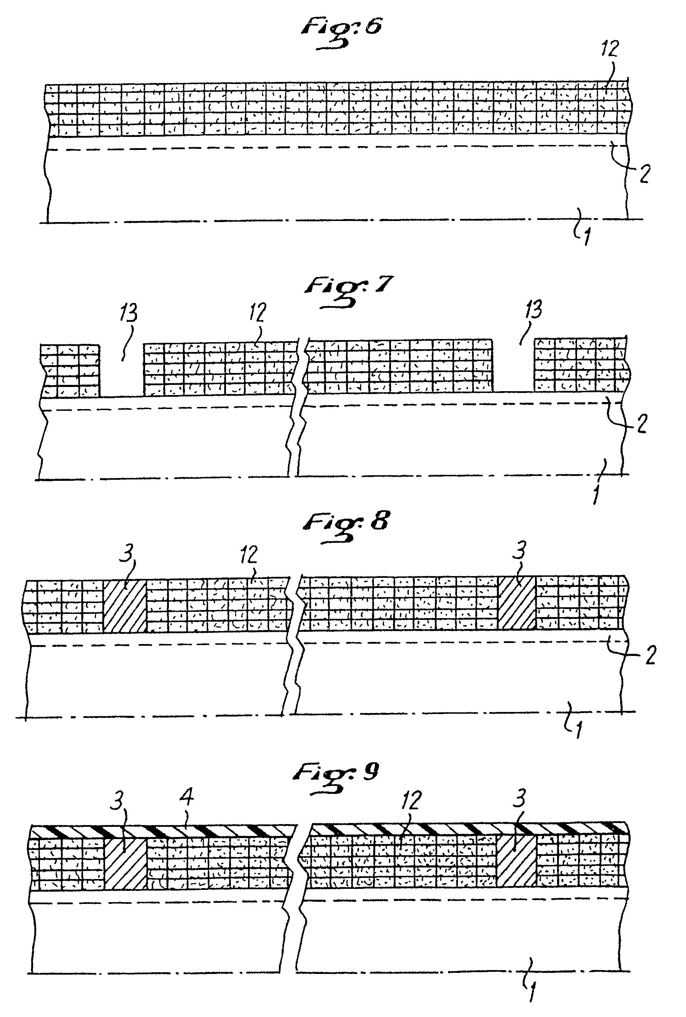

La réalisation d'une conduite selon la figure 3 sera décrite plus en détail ci-dessous en référence aux figures 6 à 9.

Dans la conduite selon la figure 3, les cloisons annulaires 3 peuvent être réparties à des intervalles relativement importants, par exemple de l'ordre de 20 mètres.

Là encore on peut utiliser des cloisons munies ou non d'évidements pour le passage de gaz. De même il est possible d'envisager un mode de réalisation utilisant un matériau d'isolation spiralé comme dans la figure 3 avec des cloisons telles que celles illustrées à la figure 2 et s'étendant à partir d'une âme tubulaire centrale. Il est par ailleurs possible d'envisager une combinaison des deux types de matériau d'isolation, les espaces entre les cloisons pouvant être remplis pour partie d'un matériau d'isolation moulé et pour partie d'un matériau d'isolation spiralé ou encore d'un matériau d'isolation spiralé selon des pas différents.

Les figures 4 et 5 illustrent deux variantes de montage de cloison selon l'invention. Le cloison 3 illustrée à la figure 4 présente la forme d'un disque à parois parallèles et l'évidement 7 débouche au voisinage de la périphérie de la cloison dans une cavité 7a alignée avec l'orifice 8 ménagé dans la gaine externe 4. Cette disposition peut servir à l'injection d'un produit d'adhérisation pour permettre ou favoriser l'accrochage de la gaine externe 4 sur la cloison 3.

Dans le mode de réalisation de la figure 5 la cloison 3' présente une forme de colonne dont les portées d'accrochage sur le revêtement 2 du noyau interne et/ou sur la gaine 4 peuvent également être munies de rainures comme dans le mode de réalisation de la figure 4. Une cavité 7b est également prévue à l'extrémité du conduit 7 pour l'injection d'une matière de collage.

On va maintenant décrire en se référant aux figures 6 à 9 un procédé préféré de réalisation d'une conduite selon l'invention.

Comme illustré à la figure 6 on met tout d'abord en place par spiralage autour du revêtement extérieur 2 d'un noyau 1 le matériau d'isolation 12, sur toute la longueur du noyau. Dans un exemple particulier de réalisation pour un noyau d'un diamètre de 240 mm on réalise une isolation d'une épaisseur de 40 mm.

La phase suivante consiste à découper, comme illustré à la figure 7, à des intervalles appropriés des anneaux 13 dans l'isolation 12 réalisée. Dans l'exemple de réalisation on découpe ainsi des anneaux d'une épaisseur de 150 mm répartis tous les 100 mètres.

On réalise ensuite une étanchéité des parois découpées de l'isolation 12 au niveau des anneaux 13 à l'aide d'un mastic approprié.

Le cas échéant lorsque la cloison à mettre en place doit présenter un évidement pour le dégazement on réalise au fond de chaque anneau 13 une rainure dans le revêtement 2 du noyau.

A l'aide d'un solvant approprié on nettoie la surface externe du revêtement 2 du noyau et on applique sur cette surface un primaire approprié. On procède ensuite au moulage des cloisons annulaires 3. Après le moulage de chaque cloison réalisé par positionnement d'un moule approprié, on nettoie la surface extérieure de l'ensemble constitué par le noyau muni de l'isolation et les cloisons à l'aide d'un solvant approprié, essentiellement pour enlever l'agent de démoulage. On applique ensite une colle thermofusible sur la périphérie de l'ensemble et l'on extrude une gaine externe, de préférence en polyamide ou polyéthylène, à une température élevée, de l'ordre de 180°C faisant fondre la colle thermofusible assurant l'adhérence de la gaine avec les cloisons.

**Revendications**

1. Conduite calorifugée pour le transport de fluides comportant autour d'un tube ou noyau central (1) une structure d'isolation thermique, constituée par une pluralité de cloisons annulaires (3,3',11) réparties sur la longueur dudit noyau et un matériau d'isolation (6,12) remplissant les chambres annulaires ménagées entre les faces frontales des cloisons successives et le revêtement extérieur (2) du noyau central, et une gaine externe extrudée en continu (4) concentriquement audit noyau, caractérisée par le fait que ladite gaine externe (4) recouvre de manière continue les surfaces périphériques desdites cloisons annulaires et dudit matériau d'isolation et est adhérisée auxdites cloisons, et que lesdites cloisons (3,3') réalisées individuellement par moulage directement sur le noyau sont séparées les unes des autres et adhérisées chacune audit noyau (1), de telle sorte que lesdites cloisons définissent des chambres étanches entre ladite gaine (4) et ledit noyau (1).

2. Conduite calorifugée pour le transport de fluides comportant autour d'un tube ou noyau central (1) une structure d'isolation thermique, constituée apr une pluralité de cloisons annulaires (3,3',11) réparties sur la longueur dudit noyau, et un matériau d'isolation (6,12) remplissant les chambres annulaires ménagées entre les faces frontales des cloisons successives et le revêtement extérieur (2) du noyau central, et une gaine externe extrudée en continu (4) concentriquement audit noyau, caractérisée par le fait que ladite gaine externe (4) recouvre de manière continue les surfaces périphériques desdites cloisons annulaires et dudit matériau d'isolation et est adhérisée auxdites cloisons et que lesdites cloisons annulaires (11) sont formées intégralement avec une âme tubulaire (10) à partir de laquelle elles s'étendent, ladite âme tubulaire entourant coaxialement le noyau interne, de telle sorte que lesdites cloisons définissent des chambres étanches entre ladite gaine (4) et ladite âme tubulaire (10).

3. Conduite selon l'une quelconque des revendications 1 et 2, caractérisée par le fait que ledit noyau (1) est flexible.

4. Conduite selon l'une quelconque des revendications précédentes, caractérisée par le fait que les surfaces périphériques externes des cloisons (3,3',11) comportent des moyens tels que des nervures et/ou des saillies favorisant la mise en place et la tenue d'un produit d'adhérisation à la gaine extérieure (4) et/ou au revêtement (2) du noyau interne.

5. Conduite selon l'une quelconque des revendications précédentes, caractérisée par le fait que les cloisons comportent au moins un évidement radial interne (7) faisant communiquer le revêtement extérieur (2) du noyau interne de la conduite et l'extérieur de la conduite en débouchant dans un orifice correspondant (8) ménagé dans la gaine externe.

6. Conduite selon la revendication 5, caractérisée par le fait qu'elle présente dans le revêtement extérieur (2) du noyau interne une rainure périphérique (9) en regard de l'évidement (7).

7. Conduite selon l'une quelconque des revendications précédentes, caractérisée par le fait que le matériau d'isolation (6) est mis en place par injection.

8. Conduite selon l'une quelconque des revendications 1 à 6, caractérisée par le fait que le matériau d'isolation (12) est mis en place par spiralage autour du noyau d'un profilé en forme de bande ou de tube.

9. Conduite selon la revendication 8, caractérisée par le fait que le matériau d'isolation (12) est constitué par un profilé extrudé en chlorure de polyvinyle expansé appliqué sur le noyau interne par déformation plastique.

10. Conduite selon la revendication 8, caractérisée par le fait que le matériau d'isolation (12) est constitué par un profilé alvéolaire non expansé en polypropylène appliqué sur le noyau par déformation élastique.

11. Conduite selon l'une quelconque des revendications 1 à 6, caractérisée par le fait que le matériau d'isolation est mis en place autour du noyau sous forme de disques ou coquilles.

## Claims

1. Thermally insulated pipe for conveying fluid comprising, around a tube or central core (1), a heat insulation system, made up of a series of annular partitions (3,3',11) distributed along the said core and insulating material (6,12) filling the annular chambers situated between the front sides of the successive partitions and the exterior covering (2) of the central core, and an outer sheath (4) continuously extruded concentrically to the said core, characterised in that the said outer sheath (4) continuously covers the peripheral surfaces of the said annular partitions and the said insulating material and is affixed to the said partitions, and that the said partitions (3,3') which are individually moulded directly onto the core are separated from each other and affixed to the said core (1), in such a manner that the said partitions form watertight chambers between the said sheath (4) and the said core (1).

2. Thermally insulated pipe for conveying fluid comprising, around a tube or central core (1), a heat insulation system, consisting of a series of annular partitions (3,3',11) distributed along the said core and insulating material (6,12) filling the annular chambers situated between the front sides of the sucessive partitions and the exterior covering (2) of the central core, and an outer sheath (4) continuously extruded concentrically to the said core, characterised in that the said outer sheath (4) continuously covers the peripheral surfaces of the said annular partitions and the said insulating material and is stuck to the said partitions and that the said annular partitions (11) are integrally formed with a tubular core (10) from which they extend, with the said tubular core concentrically arranged around the inner core, in such a manner that the said partitions form watertight chambers between the said sheath (4) and the said tubular core (10).

3. Pipe according to either of claims 1 and 2, characterised in that the said core (1) is flexible.

4. Pipe according to any of the preceding claims, characterised in that the outer peripheral surfaces of the partitions (3,3',11) feature various devices such as ribs and/or protrusions which facilitate the application and adhesion of an adhesive to the outer sheath (4) and/or covering (2) of the inner core.

5. Pipe according to any of the preceding claims, characterised in that the partitions comprise at least one internal radial cavity (7) which connects the exterior cover (2) of the inner code of the pipe and the outside of the pipe, leading into a corresponding aperture (8) in the outer sheath.

6. Pipe according to claim 5, characterised in that the exterior cover (2) of the inner core has a peripheral groove (9) opposite the cavity (7).

7. Pipe according to any of the preceding claims, characterised in that the insulating material (6) is introduced by means of injection.

8. Pipe according to any of claims 1 to 6, characterised in that the insulating material (12) is introduced by winding a section in the form of a strip or tube around the core.

9. Pipe according to claim 8, characterised in that the insulating material (12) consists of an extruded section made from expanded polyvinyl chloride applied to the inner core by means of forming.

10. Pipe according to claim 8, characterised in that the insulating material (12) consists of a non-expanded cellular section made from polypropylene applied to the core by means of forming.

11. Pipe according to any one of claims 1 to 6, characterised in that the insulating material is arranged around the core in the form of disks or shells.

## Patentansprüche

1. Thermisch isolierte Rohrleitung für den Transport von Flüssigkeiten mit einer um ein zentrales Rohr oder einen zentralen Kern (1) angeordneten, thermisch isolierenden Struktur bestehend aus einer Vielzahl von ringförmigen Zwischenwänden (3, 3', 11), die über die Länge des genannten Kerns verteilt sind, und einem Isoliermaterial (6, 12), das die ringförmigen Kammern ausfüllt, die zwischen den frontalen Flächen der nacheinander angeordneten Zwischenwände und der äußeren Umhüllung (2) des zentralen Kerns ausgebildet sind und einer äußeren, kontinuierlich extrudierten, konzentrisch zum Kern verlaufenden äußeren Hülle (4), dadurch gekennzeichnet, daß die äußere Hülle (4) kontinuierlich die peripheren Oberflächen der ringförmigen Zwischenwände und des genannten Isoliermaterials überdeckt und mit diesen Zwischenwänden verbunden ist und daß die Zwischenwände (3, 3'), die individuell durch Formen direkt auf dem Kern erstellt sind, voneinander separiert und jeweils mit dem Kern (1) verbunden sind dergestalt, daß die genannten Zwischenwände dichte Kammern zwischen der Hülle (4) und dem Kern (1) bilden.

2. Thermisch isolierte Rohrleitung für den Transport von Flüssigkeiten mit einer um ein zentrales Rohr oder einen zentralen Kern (1) angeordneten, thermisch isolierenden Struktur bestehend aus einer Vielzahl von ringförmigen Zwischenwänden (3, 3', 11), die über die Länge des genannten Kerns vorteilt sind, und einem Isoliermaterial (6, 12), das die ringförmigen Kammern ausfüllt, die zwischen den frontalen Flächen der nacheinander angeordneten Zwischenwände und der äußeren Umhüllung (2) des zentralen Kerns ausgebildet sind und einer äußeren, kontinuierlich extrudierten, konzentrisch zum Kern verlaufender äußeren Hülle (4), dadurch gekennzeichnet, daß die äußere Hülle (4) kontinuierlich die peripheren Oberflächen der ringförmigen Zwischenwände und des genannten Isoliermaterials überdeckt und mit diesen Zwischenwänden verbunden ist, und daß die genannten ringförmigen Zwischenwände (11) einstückig mit einer rohrförmigen Seele (10) ausgeformt sind, von der ausgehend sie sich erstrecken, wobei die rohrförmige Seele koaxial den inneren Kern dergestalt umgibt, daß die genannten Zwischenwände dichte Kammern zwischen der äußeren Hülle (4) und der rohrförmigen Seele (10) ausbilden.

3. Rohrleitung nach einem der Ansprüche 1 und 2, dadurch gekennzeichnet, daß der Kern (1) flexibel ist.

4. Rohrleitung nach einem der vorangegangenen Ansprüche, dadurch gekennzeichnet, daß die äußeren peripheren Oberflächen der Zwischenwände (3, 3', 11) Mittel wie beispielsweise Rippen und/oder Vorsprünge aufweisen, die das Aufbringen und den Halt eines Klebemittels auf der äußeren Hülle (4) und/oder auf der Umhüllung (2) des inneren Kerns begünstigen.

5. Rohrleitung nach einem der vorangegangenen Patentansprüche, dadurch gekennzeichnet, daß die Zwischenwände mindestens eine interne radiale Ausnehmung (7) aufweisen, die eine Verbindung bewirkt zwischen der Umhüllung (2) des inneren Kerns der Rohrleitung und dem Äußeren der Rohrleitung, indem sie in ein entsprechendes Loch (8) mündet, das in der äußeren Hülle vorgesehen ist.

6. Rohrleitung nach Anspruch 5, dadurch gekennzeichnet, daß sie in der Umhüllung (2) des inneren Kerns eine die Ausnehmung (7) fortsetzende periphere Rille (9) hat.

7. Rohrleitung nach einem der vorangegangenen Ansprüche, dadurch gekennzeichnet, daß das Isoliermaterial (6) durch Injektion aufgebracht ist.

8. Rohrleitung nach einem der Ansprüche 1 bis 6, dadurch gekennzeichnet, daß das Isoliermaterial (12) aufgebracht ist durch spiralförmiges Aufbringen um den Kern mit einem Profil in Form eines Bandes oder eines Rohres.

9. Rohrleitung nach Anspruch 8, dadurch gekennzeichnet, daß das Isoliermaterial (12) gebildet ist von einem extrudierten Profil aus expendiertem Polyvinylchlorid, das durch plastische Deformation auf den internen Kern aufgebracht ist.

10. Rohrleitung nach Anspruch 8, dadurch gekennzeichnet, daß das Isoliermaterial (12) gebildet ist aus einem zellenförmigen, nicht expandierten Polropylen-Profil, das auf den Kern durch plastische Deformation aufgebracht ist.

**11.** Rohrleitung nach einem der Ansprüche 1 bis 6, dadurch gekennzeichnet, daß das Isoliermaterial aufgebracht ist um den Kern in Form von Scheiben oder Schalen.

Fig.1

Fig.2

Fig.3

Fig.4

Fig.5

Fig. 6

Fig. 7

Fig. 8

Fig. 9